# EUROPEAN PATENT SPECIFICATION

(11) **EP 4 124 777 B1**
(45) Date of publication and mention of the grant of the patent: **26.06.2024**
(21) Application number: 22186606.4
(22) Date of filing: 25.07.2022
(51) Int. Cl.: F16H 19/00, B60H 1/00

(54) **KINEMATIC MECHANISM WITH RECESSED TOOTHED SECTOR**
KINEMATISCHER MECHANISMUS MIT VERSENKTEM VERZAHNTEM SEKTOR
MÉCANISME CINÉMATIQUE À SECTEUR DENTÉ ENCASTRÉ

(30) Priority: 27.07.2021 IT 202100019985
(43) Date of publication of application: 01.02.2023
(73) Proprietor: DENSO THERMAL SYSTEMS S.p.A., 10046 Poirino (Torino) (IT)
(72) Inventor: CAVUOTI, Adriano, 10046 Poirino (Torino) (IT); CARBONE, Andrea, 10046 Poirino (Torino) (IT)
(74) Representative: Vanzini, Christian

(56) References cited:
- EP-A1- 3 203 055
- WO-A1-2014/195037
- WO-A1-2016/129692
- US-A1- 2010 199 790

## Description

The present invention relates to a kinematic mechanism for controlling a first and a second rotating element having respective axes of rotation which are parallel to each other and arranged at a fixed distance from each other, the kinematic mechanism comprising
a support,
a toothed driving element movably mounted on the support and comprising teeth, hereinafter referred to as driving teeth,
a first driven toothed element which is rotatably mounted on the support and is adapted to be rigidly connected to the first rotating element, said first driven toothed element comprising a first toothed sector and a second toothed sector which are coaxial to the axis of rotation of the first rotating element and have a different modulus, wherein the first toothed sector engages with the driving teeth, and
a second driven toothed element which is rotatably mounted on the support and is adapted to be rigidly connected to the second rotating element, said second driven toothed element comprising a toothed sector, hereinafter referred to as the third toothed sector, which engages with the second toothed sector of the first driven toothed element.

A specific example of the field of application of the invention consists in air distribution boxes for vehicle air conditioning systems, where air distribution flaps are used to mix fresh and/or treated air and to convey it to different areas of a vehicle cabin.

In particular applications, it may be required that two different flaps be moved or stopped sequentially. To this end, the driven toothed elements may be equipped with additional coupling means that intervene in place of the respective toothed sectors during a movement phase of the driven toothed elements in order to hold one of the driven toothed elements stationary while the other rotates. The implementation of such coupling means on the driven toothed elements entails an increase in the size of such elements, in particular in the axial direction, insofar as the coupling means in question must be arranged in such a way as to avoid interference between the driven toothed elements.

WO 2014/195037 A1 discloses a kinematic mechanism of the above mentioned type.

The object of the present invention is therefore that of providing a kinematic mechanism of simple construction that allows for the sequential control of two flaps while restricting the dimensions, in particular in the axial direction.

More generally, the object of the invention is that of providing a kinematic mechanism that makes it possible to restrict the dimensions thereof, in particular in the axial direction.

In view of this object, the subject of the invention is a kinematic mechanism of the type defined at the beginning, wherein the second toothed sector comprises a first toothing portion located axially above the first toothed sector, and a second inclined toothing portion that extends from the first toothing portion and has an end arranged next to the first toothed sector, and
wherein the third toothed sector comprises a first toothing portion that engages with the first toothing portion of the second toothed sector and is arranged at a different axial height from the first toothed sector, and a second inclined toothing portion that engages with the second toothing portion of the second toothed sector and extends from the first toothing portion of the third toothed sector, said second toothing portion of the second toothed sector having an end arranged at a different axial height from the first toothing portion of the third toothed sector.

In such kinematic mechanisms, the second toothed sector and the third toothed sector which form the coupling between the first driven toothed element and the second driven toothed element are arranged only in part at a different axial height from the driving teeth and the first toothed sector which form the coupling between the toothed driving element and the first driven toothed element, while the remainder of this second toothed sector and third toothed sector is arranged at an axial height which is closer to, if not approximately coincident with, that of the driving teeth and the first toothed sector. This consequently leads to a reduction in the overall dimensions of the components, in particular in the axial direction.

According to one embodiment, the third toothed sector engages with the second toothed sector in a first stretch of travel between a first end position and a second end position of rotation of the first driven toothed element, and wherein the first driven toothed element also comprises a cam track and the second driven toothed element also comprises a follower pin configured to engage said cam track in a second stretch of travel between the first end position and the second end position of rotation of the first driven toothed element,
wherein the cam track is configured in such a way as to keep the second driven toothed element stationary during at least part of the second stretch of travel of the first driven toothed element. In particular, the cam track axially overlaps the second toothing portion of the third toothed sector during at least part of the second stretch of travel of the first driven toothed element.

With this embodiment, the cam track and the relative follower pin provide sequential control of the motion of the driven toothed elements. Interference between the cam track and the second driven toothed element, when the latter is stationary, is avoided by virtue of the particular arrangement of the toothed sectors that have a lowered part. Otherwise, if the toothed sectors had not had a lowered part, the cam track would have had to be arranged at a higher axial height in order to avoid interference with the toothed sector of the second driven toothed element.

Further features and advantages of the kinematic mechanism according to the invention will become clearer from the following detailed description of an embodiment of the invention, made with reference to the accompanying drawings, provided purely by way of non-limiting example, in which:
Figure 1 is a perspective view of a kinematic mechanism according to the invention;
Figure 2 is a perspective view of a toothed driving element coupled to a first driven toothed element of the kinematic mechanism of Figure 1;
Figures 3 and 4 are different perspective views of the first driven toothed element coupled to a second driven toothed element of the kinematic mechanism of Figure 1;
Figures 5 and 6 are perspective views of the first driven toothed element and the second driven toothed element, respectively; and
Figures 7 to 11 are perspective views of the kinematic mechanism of Figure 1 in different operating positions.

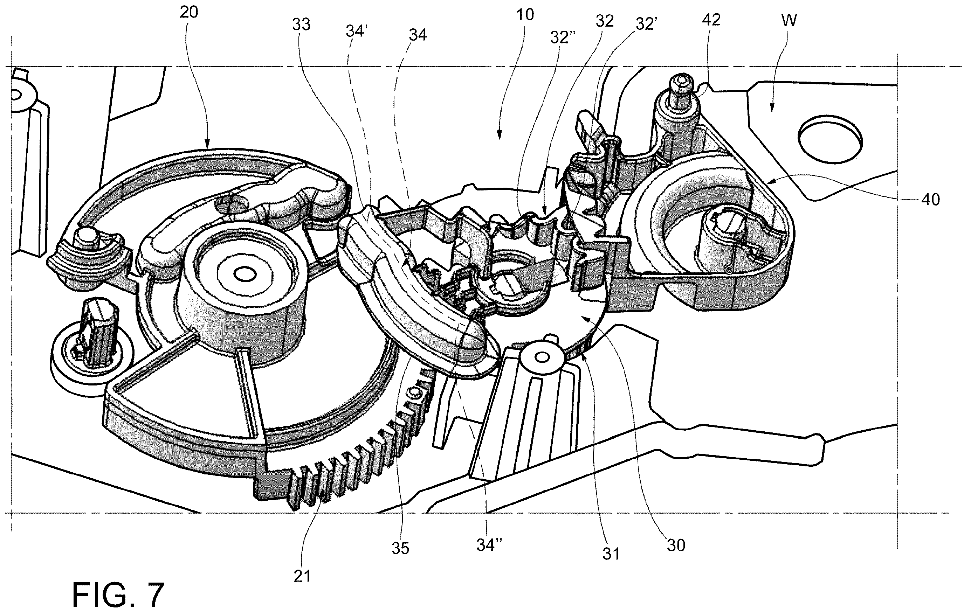

In Figures 7 to 11, a detail is shown of a wall W of an air distribution box of an air conditioning system for a motor vehicle. The wall W supports a kinematic mechanism according to the invention, indicated as a whole by reference sign 10.

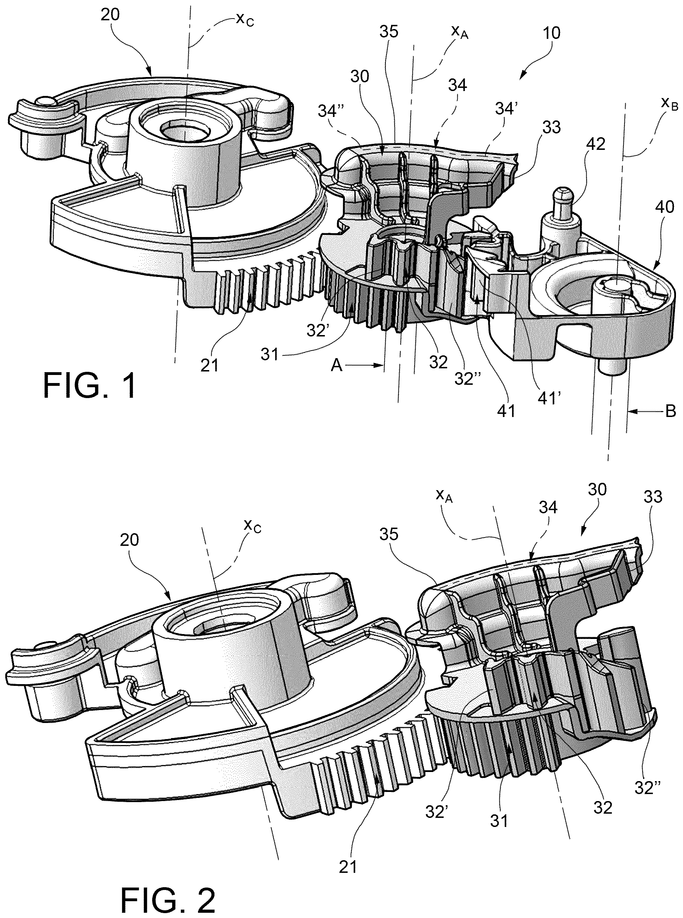

With reference also to Figure 1, the kinematic mechanism 10 is connected to a first flap and a second flap of the air distribution box, which flaps have respective axes of rotation x_{A} and x_{B} which are parallel and positioned at a fixed distance from each other. The flaps in question are represented in Figure 1 by the respective shafts denoted by A and B, each of which has one end supported by the wall W of the air distribution box, and an opposite end supported by another part of the air distribution box. More generally, reference signs A and B denote rotating elements which are connected to the kinematic mechanism 10 and which in turn serve as additional transmission elements for transmitting motion to the flaps (not shown).

The kinematic mechanism 10, arranged on the opposite side of the wall W in relation to the inside of the box in which the rotating elements A and B extend, includes a toothed driving element 20 movably mounted on the wall W and comprising teeth 21, which hereinafter will also be referred to as driving teeth. In the example shown, the toothed driving element 20 is an element mounted on the wall W so as to be able to rotate about an axis of rotation xc that is parallel to the axes of rotation x_{A} and x_{B} of the rotating elements A and B and arranged at a fixed distance therefrom. According to an alternative embodiment (not shown), the toothed driving element could be, for example, a rack slidably mounted on the wall W.

The lever 20 may be a monolithic element made of a plastics material.

The toothed driving element 20 is connected directly or indirectly to a source of motion (not shown) such as a rotary actuator.

The kinematic mechanism 10 also comprises a first driven toothed element 30 which is rigidly connected to the first rotating element A and therefore also rotatable about the axis of rotation x_{A} of the first rotating element A. The first driven toothed element 30 may be a monolithic element made of a plastics material.

Finally, the kinematic mechanism comprises a second driven toothed element 40 which is rigidly connected to the second rotating element B and therefore also rotatable about the axis of rotation x_{B} of the second rotating element B. The second driven toothed element 40 may be a monolithic element made of a plastics material.

The first driven toothed element 30 comprises a first toothed sector 31 and a second toothed sector 32 which are coaxial to the axis of rotation x_{A} of the first rotating element A. The first toothed sector 31 and the second toothed sector 32 have a different tooth modulus or tooth pitch. The first toothed sector 31 engages with the driving teeth 21 of the toothed driving element 20.

The second driven toothed element 40 comprises a toothed sector 41, which hereinafter will also be referred to as the third toothed sector. The third toothed sector 41 engages with the second toothed sector 32 of the first driven toothed element 30. The gearing formed by the third toothed sector 41 and the second toothed sector 32 of the first driven toothed element 30 has a different gear ratio than the gearing formed by the first toothed sector 31 of the first driven toothed element 30 and the driving teeth 21.

The first toothed sector 31 of the first driven toothed element 30 has teeth, in particular cylindrical teeth, which are arranged at a constant axial height along the entire extension of the teeth. In other words, the first toothed sector 31 extends orthogonally to the axis of rotation x_{A} of the first driven toothed element 30 and the first rotating element A. In other words, the teeth of the first toothed sector 31 are arranged at the same axial height.

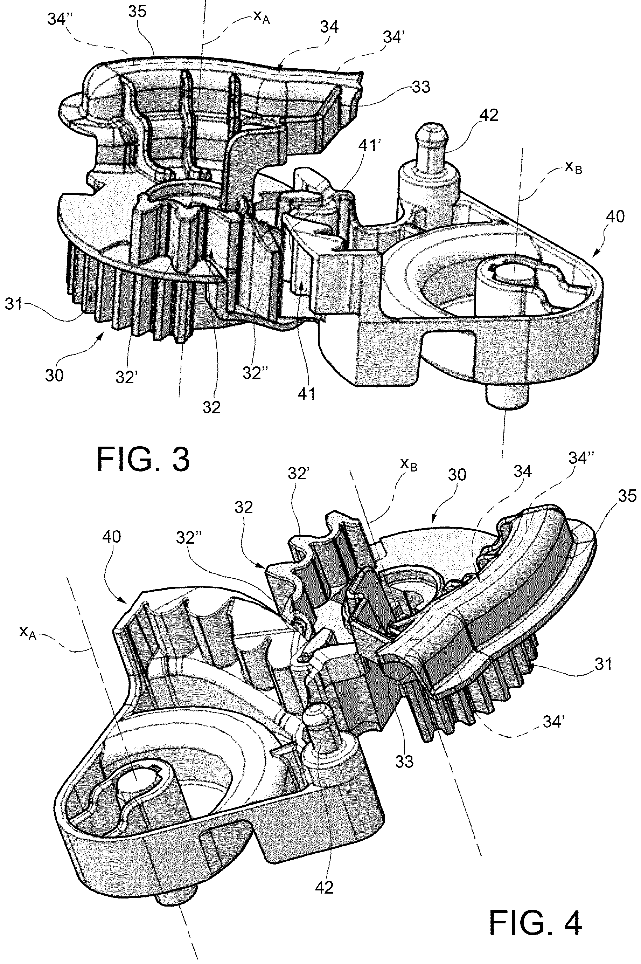

With particular reference to Figures 2, 3 and 5, the second toothed sector 32 of the first driven toothed element 30 has teeth, in particular cylindrical teeth, which are arranged at a variable axial height along the extension of the teeth. In other words, the teeth of the second toothed sector 32 are arranged at different axial heights.

More specifically, the second toothed sector 32 comprises a first toothing portion 32' axially overlapping the first toothed sector 31, and a second toothing portion 32" which inclines away from the first toothing portion 32' so as to be arranged next to the first toothed sector 31. In other words, there is an angular sector of the first driven toothed element 30 in which there are both the first toothed sector 31 and the second toothed sector 32 axially overlapping each other, i.e., at an end toothing portion of the first toothed sector 31 and of the first toothing portion 32' of the second toothed sector 32. However, there is another angular sector of the first driven toothed element 30 in which there is only the toothed sector 32, more precisely the second toothing portion 32", which is arranged next to the first toothed sector 31. "Arranged next to" signifies that at least part of the axial extension of the second toothing portion 32" is arranged next to the first toothed sector 31, i.e. within the range of axial heights covered by the first toothed sector 31. Furthermore, the axial end of the second toothing portion 32" farther from the first toothed sector 31 is arranged at a lowered height compared to the height of the relevant axial end of the first toothing portion 32' farther from the first toothed sector 31.

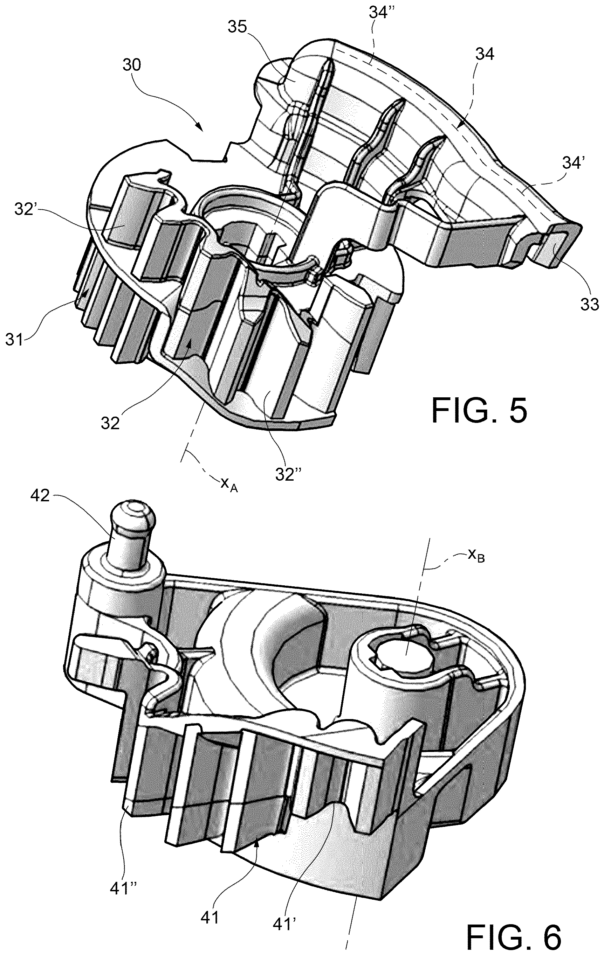

As may be seen in particular in Figure 6, the toothed sector 41 of the second driven toothed element 40, or third toothed sector, is shaped in accordance with the second toothed sector 32 of the first driven toothed element 30. The third toothed sector 41 therefore comprises a first toothing portion 41' that engages with the first toothing portion 32' of the second toothed sector 32 and is arranged at a different axial height from the first toothed sector 31, and a second toothing portion 41" that engages with the second toothing portion 32" of the second toothed sector 32 and inclines away from the first toothing portion 41' of the third toothed sector 41 so as to be arranged at a different axial height in relation thereto. Furthermore, the axial end of the second toothing portion 41" farther from the first toothed sector 31is arranged at a lowered height compared to the height of the relevant axial end of the first toothing portion 41' farther from the first toothed sector 31.

A cam track is also formed in a protrusion 35 of the body of the first driven toothed element 30; in the drawings, only a mouth 33 of the cam track is visible, but the path thereof is represented by a dotted line, indicated with 34. The cam track 34 comprises a first track section 34' and a second track section 34". The second track section 34" extends according to an arc of a circle, while the first track section 34" extends according to an arc of a non-circumferential curve.

A follower pin 42 is also formed in the body of the second driven toothed element 40, which follower pin is configured to engage the cam track 34.

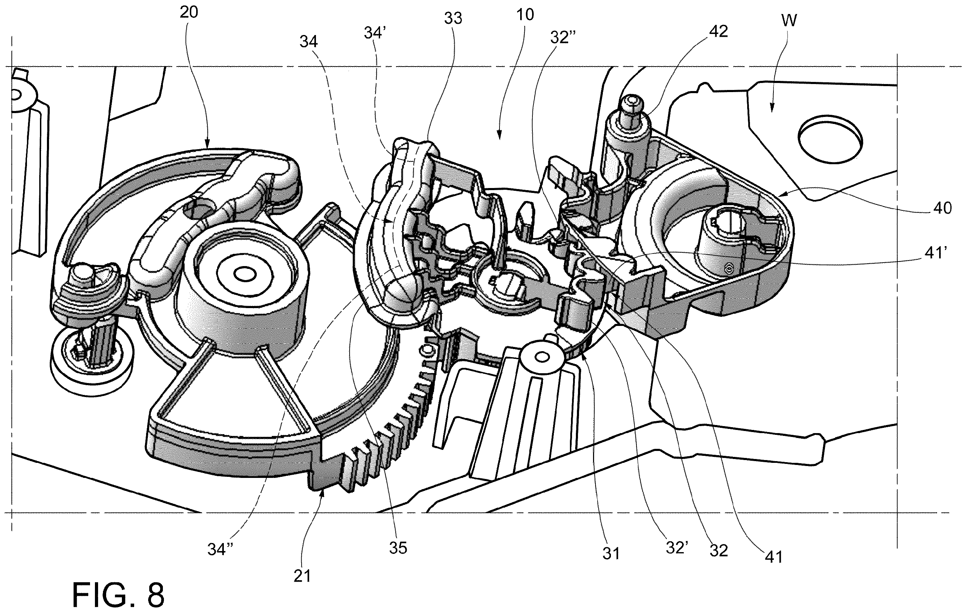

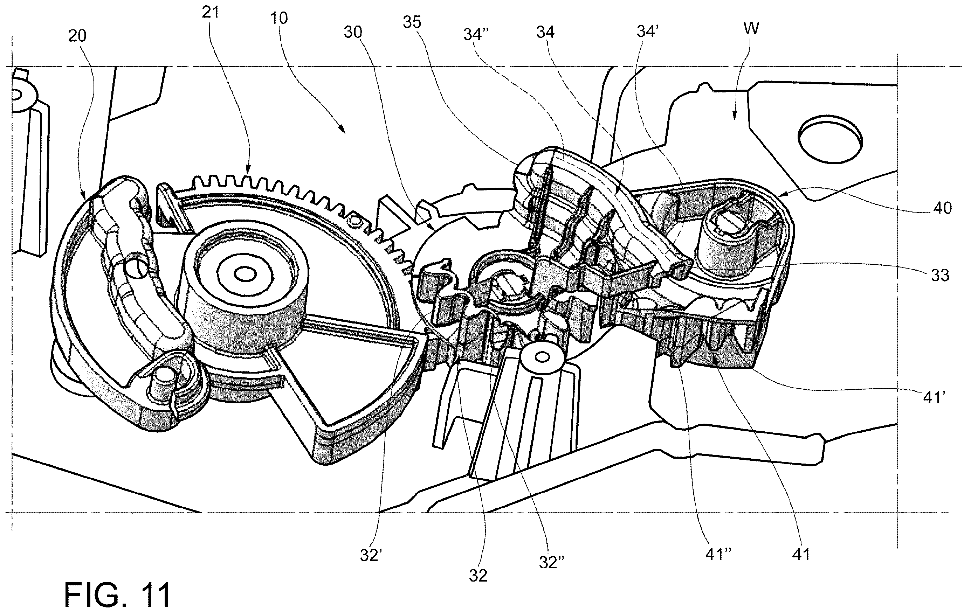

In Figures 7 to 11, the kinematic mechanism 10 in shown in different operating positions. In particular, Figure 7 shows the kinematic mechanism 10 at a first end position of the first driven toothed element 30, while Figure 11 shows the kinematic mechanism 10 at a second end position of the first driven toothed element 30. Figures 8 to 10 show intermediate positions.

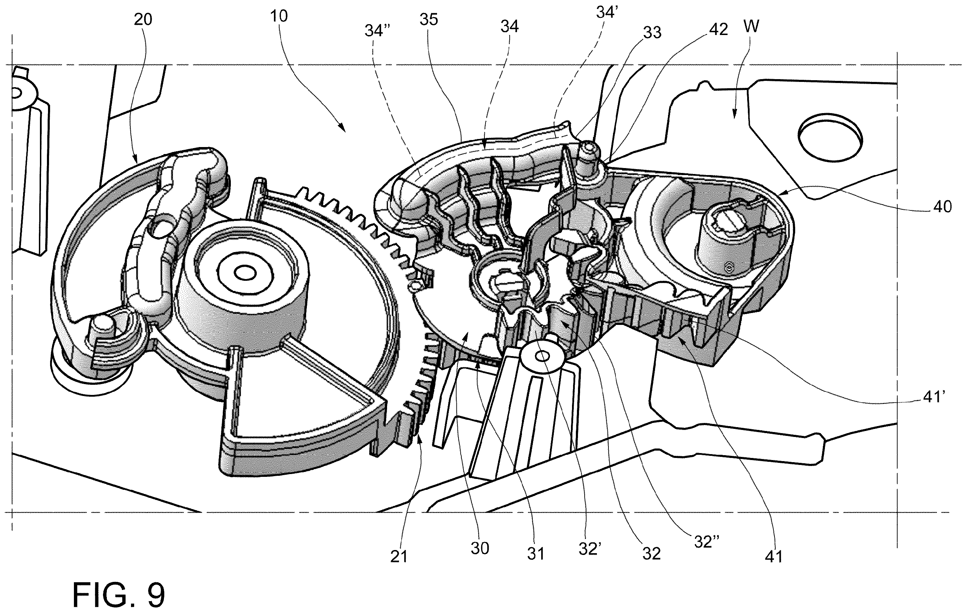

In moving from the position of Figure 7 to the position of Figure 11, the toothed driving element 20 rotates counterclockwise, while the first driven toothed element 30 rotates clockwise. The first driven toothed element 30 is dragged into rotation by the toothed driving element 20 by virtue of the engagement between the driving teeth 21 and the first toothed sector 31. In Figures 7 to 10, the second driven toothed element 40 rotates counterclockwise. The second driven toothed element 40 is dragged into rotation by the first driven toothed element by virtue of the engagement between the second toothed sector 32 and the third toothed sector 41; in particular, there is firstly the engagement between the first toothing portion 32' of the second toothed sector 32 and the first toothing portion 41' of the third toothed sector 41 (Figures 7-8), and then the engagement between the second toothing portion 32" of the second toothed sector 32 and the second toothing portion 41" of the third toothed sector 41 (Figures 9-10).

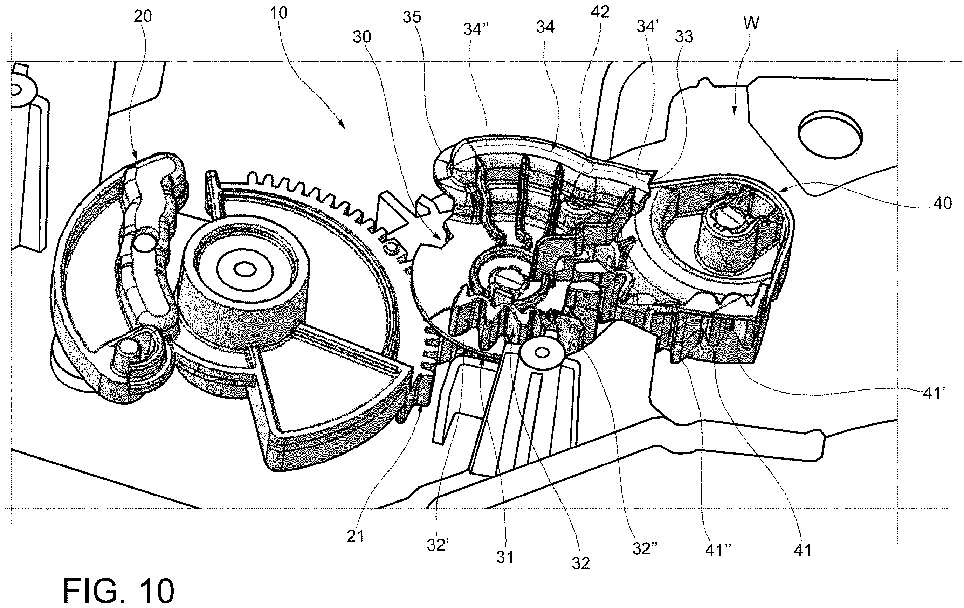

In the transition from the position of Figure 9 to the position of Figure 10, the follower pin 42 enters the cam track 34 through the mouth 33 and travels over the first track section 34'; the position reached by the follower pin 42 is represented by a dotted line in Figure 10. At the position in Figure 10, the end of the second toothed sector 32 and the third toothed sector 41 has been reached; from this position onwards, the first driven toothed element 30 is no longer able to drag into rotation the second driven toothed element 40, which is then released.

In moving from the position of Figure 10 to the position of Figure 11, the second driven toothed element 40 is maintained at the position reached thereby by virtue of the fact that the follower pin 42 is guided within the second track section 34" of the cam track 34, which has a circumferential progression and moves with the first driven toothed element 30.

As may be seen from a comparison between Figures 10 and 11, in the transition between these positions, the protrusion 35 in which the cam track 34 is located has been moved above the third toothed sector 41 which instead remains stationary together with the second driven toothed element 40. More precisely, the protrusion 35 in which the cam track 34 is located has been moved above the second toothing portion 41" of the third toothed sector 41, which is lower compared to the first toothing portion 41' of the third toothed sector 41. In this way, interference between the components is avoided without having to increase the axial height of the protrusion 35 in which the cam track 34 is located.

In reversing the rotation of the toothed driving element 20, the sequence described above is reversed.

It is understood that the invention is not limited to the embodiments described and shown here, but instead may be subject to modifications relating to the shape and arrangement of parts and design and operating details, according to the numerous possible variants that will appear appropriate to those skilled in the art, and which are to be understood as included within the scope of the invention, as defined by the following claims.

## Claims

1. A kinematic mechanism (10) for controlling a first rotating element and a second rotating element (A, B) having respective axes of rotation (x_{A}, x_{B}) which are parallel to each other and arranged at a fixed distance from each other, the kinematic mechanism comprising
a support (W),
a toothed driving element (20) movably mounted on the support (W) and comprising teeth (21), hereinafter referred to as driving teeth,
a first driven toothed element (30) rotatably mounted on the support (W) and adapted to be rigidly connected to the first rotating element (A), said first driven toothed element comprising a first toothed sector (31) and a second toothed sector (32) which are coaxial with the axis of rotation (x_{A}) of the first rotating element (A) and have a different modulus, wherein the first toothed sector (31) engages with the driving teeth (21), and
a second driven toothed element (40) rotatably mounted on the support (W) and adapted to be rigidly connected to the second rotating element (B), said second driven toothed element comprising a toothed sector (41), hereinafter referred to as the third toothed sector, which engages with the second toothed sector (32) of the first driven toothed element (30),
**characterized in that** the second toothed sector (32) comprises a first toothing portion (32') located axially above the first toothed sector (31), and a second inclined toothing portion (32") that extends from the first toothing portion (32') and has an end arranged next to the first toothed sector (31), and
**in that** the third toothed sector (41) comprises a first toothing portion (41') that engages with the first toothing portion (32') of the second toothed sector (32) and is arranged at a different axial height from the first toothed sector (31), and a second inclined toothing portion (41") that engages with the second toothing portion (32") of the second toothed sector (32) and extends from the first toothing portion (41') of the third toothed sector (41), said second toothing portion (32") of the second toothed sector (32) having an end arranged at a different axial height from the first toothing portion (41') of the third toothed sector (41).

2. The kinematic mechanism according to claim 1, wherein the third toothed sector (41) engages with the second toothed sector (32) in a first stretch of travel between a first end position and a second end position of rotation of the first driven toothed element (30), and wherein the first driven toothed element (30) further comprises a cam track (34) and the second driven toothed element further comprises a follower pin (42) configured to engage said cam track in a second stretch of travel between the first end position and the second end position of rotation of the first driven toothed element (30),
wherein the cam track (34) is configured in such a way to keep the second driven toothed element (40) stationary during at least part of the second stretch of travel of the first driven toothed element (30).

3. The kinematic mechanism according to claim 2, wherein the cam track (34) axially overlaps with the second toothing portion (41") of the third toothed sector (41) during at least part of the second stretch of travel of the first driven toothed element (30).

4. The kinematic mechanism according to any of the preceding claims, wherein the toothed driving element (20) is mounted on the support (W) so as to be able to rotate about an axis of rotation (xc) that is parallel to the axes of rotation (x_{A}, x_{B}) of the first and the second rotating element (A, B) and arranged at a fixed distance therefrom.

5. An air distribution box for motor vehicles, comprising the kinematic mechanism (10) according to any of the preceding claims, as well as a first air distribution flap (A) connected to the first driven toothed element (30) and a second air distribution flap (B) connected to the second driven toothed element (40).

## Patentansprüche

1. Kinematischer Mechanismus (10) zum Kontrollieren eines ersten sich drehenden Elements und eines zweiten sich drehenden Elements (A,B), die jeweilige Rotationsachsen (x_{A}, x_{B}) haben, die zueinander parallel sind und unter einem bestimmten Abstand zueinander angeordnet sind, wobei der kinematische Mechanismus enthält:
einen Träger (W),
ein verzahntes Antriebselement (20), das beweglich auf dem Träger (W) montiert ist und Zähne (21) enthält, anschließend als Antriebszähne bezeichnet,
ein erstes angetriebenes verzahntes Element (30), das drehbar auf dem Träger (W) montiert ist und angepasst ist, mit dem ersten sich drehenden Element (A) fest verbunden zu werden, wobei das erste angetriebene verzahnte Element einen ersten verzahnten Sektor (31) und einen zweiten verzahnten Sektor (32) enthält, die koaxial zur Rotationsachse (x_{A}) des ersten sich drehenden Elements (A) sind und einen unterschiedlichen Zahnmodul haben, wobei der erste verzahnte Sektor (31) mit den Antriebszähnen (21) in Eingriff ist, und
ein zweites angetriebenes verzahntes Element (40), das drehbar auf dem Träger (W) montiert ist und angepasst ist, mit dem zweiten sich drehenden Element (B) fest verbunden zu werden, wobei das zweite angetriebene verzahnte Element einen verzahnten Sektor (41) enthält,
anschließend als der dritte verzahnte Sektor bezeichnet, der mit dem zweiten verzahnten Sektor (32) des ersten angetriebenen verzahnten Elements (30) in Eingriff ist,
**dadurch gekennzeichnet, dass** der zweite verzahnte Sektor (32) einen ersten Zahnbereich (32') enthält, der sich axial oberhalb des ersten verzahnten Sektors (31) befindet, und einen zweiten schrägen Zahnbereich (32") enthält, der sich von dem ersten Zahnbereich (32') aus erstreckt und ein Ende aufweist, das neben dem ersten verzahnten Sektor (31) angeordnet ist, und
dadurch, dass der dritte verzahnte Sektor (41) einen ersten Zahnbereich (41') enthält, der mit dem ersten Zahnbereich (32') des zweiten verzahnten Sektors (32) in Eingriff ist und auf einer unterschiedlichen axialen Höhe bezüglich des ersten verzahnten Sektors (31) angeordnet ist, und einen zweiten schrägen Zahnbereich (41") enthält, der mit dem zweiten Zahnbereich (32") des zweiten verzahnten Sektors (32) in Eingriff ist und sich von dem ersten Zahnbereich (41') des dritten verzahnten Sektors (41) aus erstreckt, wobei der zweite Zahnbereich (32") des zweiten verzahnten Sektors (32) ein Ende aufweist, das auf einer unterschiedlichen axialen Höhe zu dem ersten Zahnbereich(41') des dritten verzahnten Sektors (41) angeordnet ist.

2. Kinematischer Mechanismus nach Anspruch 1, wobei der dritte verzahnte Sektor (41) mit dem zweiten verzahnten Sektor (32) in einem ersten Bewegungsabschnitt zwischen einer ersten Endposition und einer zweiten Endposition der Rotation des ersten angetriebenen verzahnten Elements (30) in Eingriff ist, und wobei das erste angetriebene verzahnte Element (30) weiter eine Nockenbahn (34) enthält und das zweite angetriebene verzahnte Element weiter einen Mitnehmerstift (42) enthält, der angepasst ist, mit der Nockenbahn in einem zweiten Bewegungsabschnitt zwischen der ersten Endposition und der zweiten Endposition der Rotation des ersten angetriebenen verzahnten Elements (30) in Eingriff zu sein,
wobei die Nockenbahn (34) so angepasst ist, dass sie das zweite angetriebene verzahnte Element (40) während zumindest einem Teil des zweiten Bewegungsabschnitts des ersten angetriebenen verzahnten Elements (30) stationär hält.

3. Kinematischer Mechanismus nach Anspruch 2, wobei die Nockenbahn (34) axial mit dem zweiten Zahnbereich (41") des dritten verzahnten Sektors (41) während zumindest eines Teils des zweiten Bewegungsabschnitts des ersten angetriebenen verzahnten Elements (30) überlappt.

4. Kinematischer Mechanismus nach einem der vorhergehenden Ansprüche, wobei das verzahnte Antriebselement (20) auf dem Träger (W) so montiert ist, dass es sich um eine Rotationsachse (xc) drehen kann, die parallel zu den Rotationsachsen (x_{A}, x_{B}) des ersten und des zweiten sich drehenden Elements (A, B) ist und unter einem festgelegten Abstand dazu angeordnet ist.

5. Luftverteilerbox für Kraftfahrzeuge, enthaltend den kinematischen Mechanismus (10) nach einem der vorhergehenden Ansprüche, sowie eine erste Luftverteilerklappe (A), die mit dem ersten angetriebenen verzahnten Element (30) verbunden ist, und eine zweite Luftverteilerklappe (B), die mit dem zweiten angetriebenen verzahnten Element (40) verbunden ist.

## Revendications

1. Mécanisme cinématique (10) permettant de commander un premier élément rotatif et un deuxième élément rotatif (A, B) ayant des axes de rotation (x_{A}, x_{B}) respectifs qui sont parallèles l'un à l'autre et agencés à une distance fixe l'un de l'autre, le mécanisme cinématique comprenant
un support (W),
un élément d'entraînement denté (20) monté sur le support (W) de façon mobile et comprenant des dents (21), ci-après dénommées dents d'entraînement,
un premier élément denté entraîné (30) monté sur le support (W) de façon à pivoter et adapté pour être relié de manière rigide au premier élément rotatif (A), ledit premier élément denté entraîné comprenant un premier secteur denté (31) et un deuxième secteur denté (32) qui sont coaxiaux à l'axe de rotation (x_{A}) du premier élément rotatif (A) et présentent un module différent, le premier secteur denté (31) venant en prise avec les dents d'entraînement (21), et
un deuxième élément denté entraîné (40) monté sur le support (W) de façon à pivoter et adapté pour être relié de manière rigide au deuxième élément rotatif (B), ledit deuxième élément denté entraîné comprenant un secteur denté (41), ci-après dénommé troisième secteur denté, qui vient en prise avec le deuxième secteur denté (32) du premier élément denté entraîné (30),
**caractérisé en ce que** le deuxième secteur denté (32) comprend une première partie de denture (32') située axialement au-dessus du premier secteur denté (31) et une deuxième partie de denture inclinée (32") qui s'étend à partir de la première partie de denture (32') et présente une extrémité agencée à côté du premier secteur denté (31), et
**en ce que** le troisième secteur denté (41) comprend une première partie de denture (41') qui vient en prise avec la première partie de denture (32') du deuxième secteur denté (32) et est agencée à une hauteur axiale différente du premier secteur denté (31), et une deuxième partie de denture inclinée (41") qui vient en prise avec la deuxième partie de denture (32") du deuxième secteur denté (32) et s'étend à partir de la première partie de denture (41') du troisième secteur denté (41), ladite deuxième partie de denture (32") du deuxième secteur denté (32) présentant une extrémité agencée à une hauteur axiale différente de la première partie de denture (41') du troisième secteur denté (41).

2. Mécanisme cinématique selon la revendication 1, dans lequel le troisième secteur denté (41) vient en prise avec le deuxième secteur denté (32) dans une première portion de course entre une première position de fin et une deuxième position de fin de rotation du premier élément denté entraîné (30), et dans lequel le premier élément denté entraîné (30) comprend en outre une piste de came (34) et le deuxième élément denté entraîné comprend en outre une broche suiveuse (42) configurée pour venir en prise avec ladite piste de came dans une deuxième portion de course entre la première position de fin et la deuxième position de fin de rotation du premier élément denté entraîné (30),
dans lequel la piste de came (34) est configurée de manière à maintenir le deuxième élément denté entraîné (40) fixe pendant au moins une partie de la deuxième portion de course du premier élément denté entraîné (30).

3. Mécanisme cinématique selon la revendication 2, dans lequel la piste de came (34) chevauche axialement la deuxième partie de denture (41") du troisième secteur denté (41) pendant au moins une partie de la deuxième portion de course du premier élément denté entraîné (30).

4. Mécanisme cinématique selon l'une quelconque des revendications précédentes, dans lequel l'élément d'entraînement denté (20) est monté sur le support (W) de façon à pouvoir tourner autour d'un axe de rotation (xc) qui est parallèle aux axes de rotation (x_{A}, x_{B}) du premier et du deuxième éléments rotatifs (A, B) et agencé à une distance fixe de celui-ci.

5. Boîtier répartiteur d'air pour véhicules automobiles, comprenant le mécanisme cinématique (10) selon l'une quelconque des revendications précédentes, ainsi qu'un premier volet de distribution d'air (A) relié au premier élément denté entraîné (30) et un deuxième volet de distribution d'air (B) relié au deuxième élément denté entraîné (40).
